# EUROPEAN PATENT APPLICATION

(11) **EP 4 335 941 A1**
(43) Date of publication of application: **13.03.2024**
(21) Application number: 21939878.1
(22) Date of filing: 28.12.2021
(51) Int. Cl.: C22C 12/00, C22C 13/02, C22C 28/00, B23K 35/22, B23K 35/26, B23K 35/363

(54) **LEAD-FREE SOLDER PASTE**

(30) Priority: 06.05.2021 JP 2021078842
(71) Applicant: Nihon Superior Co., Ltd., Osaka 564-0063 (JP)
(72) Inventor: NISHIMURA, Tetsuro, Suita-shi, Osaka 564-0063 (JP); NAKAMURA, Kenji, Toyonaka-shi, Osaka 561-0894 (JP); MASUDA, Junya, Toyonaka-shi, Osaka 561-0894 (JP)
(74) Representative: Vossius & Partner Patentanwälte Rechtsanwälte mbB
(86) International application number: PCT/JP2021/048954
(87) International publication number: WO 2022/234690

(57) **Abstract**

The present invention relates to a solder paste containing solder powder and a flux, wherein the solder powder is a lead-free solder alloy having a solidus temperature of 150°C or less, the flux contains: a rosin; a solvent; a thixotropic agent; and an organic acid and an imidazole as an activator, the organic acid includes one or more kinds of dicarboxylic acids having 4 to 6 carbon atoms, and the imidazole includes one or more kinds among imidazole compounds having 3 to 6 carbon atoms and derivatives thereof.

## Description

### TECHNICAL FIELD

The present invention relates to a solder paste containing a specific flux and a lead-free solder alloy having a solidus temperature of 150°C or less.

### BACKGROUND ART

From the viewpoint of environmental protection, lead-free solders are widely used as solders for use in joining of electronic components. Examples of typical compositions of lead-free solders include Sn-Ag-Cu-based solder alloys, Sn-Cu-Ni-based solder alloys, and Sn-Sb-based solder alloys. These solder alloys have higher melting points than Sn-Pb-based solder alloys. While the conventionally used Sn-Pb based eutectic solder alloy has a melting point of 183°C, for example, Sn-3.0Ag-0.5Cu has a melting point of 217°C, Sn-0.7Cu-0.05Ni has a melting point of 227°C, and Sn-5.0Sb has a melting point of 238°C. These melting points are higher than that of the Sn-Pb based eutectic solder alloy. In order to use the aforementioned lead-free solder alloy, the design of a component has been changed to elevate the heat resistant temperature of the component, and an electronic circuit board using such a component has been mounted.

Meanwhile, Sn-Bi based and Sn-In-based lead-free solder alloys which have a lowered melting point by containing a predetermined amount of Bi or In have been used for boards on which electronic components with poor heat resistance are used, and for products whose operation environments such as impact, vibration, and change in the environmental temperature are not harsh (for example, LED illumination, notebook computer, etc.).Additionally, in recent years, from the viewpoint of the cost, a solder alloy having a lowered melting point (low melting point solder alloy) has come into use on boards that are not high in heat resistant temperature but are excellent in the cost performance, for personal computers that do not require high impact resistance. This has led to a growing trend toward the use of low melting point solders for general-purpose consumer electronics products.

Regarding Sn-In-based lead-free solder alloys which are one type of the aforementioned low melting point solder alloys, solder alloys having an In content of 50 to 52 mass% are known. Among them, a 48Sn-52In eutectic composition has a melting point of 118°C (ISO standard), which is significantly lower than melting points of commonly used lead-free solder alloys, and is considered to be suitable for joining electronic components having poor heat resistance. However, low melting point Sn-In-based solder alloys contain a large amount of In which is a scarce resource also known as a rare metal, and In is an expensive material compared with other metals. Therefore, there is a concern about the influence on the cost.

Regarding Sn-Bi-based lead-free solder alloys which are one type of the aforementioned low melting point solder alloys, solder alloys having a Bi content of 32 to 40 mass% or 35 to 59 mass% and the like are known. Among them, a 42Sn-58Bi eutectic composition has a melting point of 139°C, and is considered to be suitable for joining electronic components having poor heat resistance. However, Sn-Bi-based solder alloys having a low melting point tend to have such properties that they become hard and brittle when the content of Bi is large, resulting in poor alloy elongation and deteriorated joint characteristics such as drop impact resistance.

In light of the above, for improvement in the physical properties of a solder joint formed by using a low melting point solder alloy, the applicant of the present application has proposed a lead-free solder alloy having better physical properties than before and capable of forming a joint with high reliability by containing a specific amount of a specific ingredient in an Sn-Bi-based solder alloy (Patent Literature (PTL) 1).

Regarding mounting of a circuit board, for example, a mounting method is known which includes: supplying an electrode on the circuit board with a creamy solder paste containing a flux for solder paste and a solder powder by contact printing, dispenser discharge, or the like; mounting an electronic component such as a capacitor on the solder paste; and heating in a reflow furnace to melt the solder paste, thus joining the electronic component and the electrode.

Here, a solder paste containing an Sn-Bi-based solder alloy as the solder powder has a problem that generation of solder balls caused by a surface oxide layer of the solder powder increases. Generation of a lot of solder balls is known as one cause of decrease in insulation resistance and generation of short circuit.

Studies for solving such a problem have been made, and PTL 2 proposes, as a solder paste capable of preventing generation of solder balls, a solder paste containing a solder alloy including an alloy element having a strong oxidizing property by containing, in the flux, a combination of three kinds of dicarboxylic acids having different numbers of carbon atoms.

### CITATION LIST

### [PATENT LITERATURE]

[PTL 1] Japanese Patent No. 6804126
[PTL 2] Japanese Unexamined Patent Application Publication No. 2019-147190

### SUMMARY OF THE INVENTION

### PROBLEMS TO BE SOLVED BY THE INVENTION

The present inventors examined a solder paste containing a low melting point solder alloy as the solder powder, and found that the effect of preventing generation of solder balls is not sufficient merely by combining three kinds of dicarboxylic acids as described in PTL 2.

An object of the present invention is to develop a technique capable of overcoming problems of a solder joint formed by using a low melting point solder alloy, and specifically, a first object is to provide a solder paste prepared with a solder alloy having a solidus temperature of 150°C or less, and capable of effectively preventing generation of solder balls at the time of joining.

A second object of the present invention is to provide: a solder joint in which generation of solder balls is prevented, the solder joint being formed by using the solder paste; and an electronic component and an electronic device which have the solder joint.

### SOLUTION TO THE PROBLEMS

As a result of diligent study for solving the aforementioned problems, the present inventors found that the aforementioned problems can be solved by using an organic acid and an imidazole as activators and especially using a combination of a dicarboxylic acid having 4 to 6 carbon atoms and an imidazole compound having 3 to 6 carbon atoms or a derivative thereof, in a flux containing a rosin, a solvent, a thixotropic agent, and the activators.

In the flux contained in the solder paste of the present invention, a combination of the dicarboxylic acid and the imidazole is used, thereby stabilizing the dicarboxylic acid contained in the solder paste. This prevents the reaction with the solder alloy, and prevents change in the viscosity of the solder paste.

The imidazole having 3 to 6 carbon atoms has high reaction rate, thereby exerting the effect of the activity at a relatively early stage during heating. Accordingly, such imidazole is considered to be very effective for preventing the generation of solder balls.

A first aspect of the present invention is a solder paste containing solder powder and a flux, in which
the solder powder is a lead-free solder alloy having a solidus temperature of 150°C or less,
the flux contains: a rosin; a solvent; a thixotropic agent; and an organic acid and an imidazole as an activator,
the organic acid includes one or more kinds of dicarboxylic acids having 4 to 6 carbon atoms, and
the imidazole includes one or more kinds among an imidazole compounds having 3 to 6 carbon atoms and derivatives thereof.

In the first aspect, the lead-free solder alloy having the solidus temperature of 150°C or less may be one of the following (i) and (ii).
(i) A lead-free solder alloy containing 32 mass% or more and 40 mass% or less of Bi, 0.1 mass% or more and 1.0 mass% or less of Sb, 0.1 mass% or more and 1.0 mass% or less of Cu, 0.001 mass% or more and 0.1 mass% or less of Ni, 0 mass% or more and 0.3 mass% or less of Ag, 0 mass% or more and 0.1 mass% or less of Fe, 0 mass% or more and 0.1 mass% or less of Co, 0 mass% or more and 0.01 mass% or less of Ga, 0 mass% or more and 0.01 mass% or less of Mn, 0 mass% or more and 0.01 mass% or less of V, 0 mass% or more and 0.1 mass% or less of P, and 0 mass% or more and 0.1 mass% or less of Ge, with a remainder being Sn and unavoidable impurities (hereinafter, also referred to as lead-free solder alloy 1).
(ii) A lead-free solder alloy containing 56 to 60 mass% of Bi, 0 mass% or more and 0.3 mass% or less of Ag, 0 mass% or more and 0.1 mass% or less of Fe, 0 mass% or more and 0.1 mass% or less of Co, 0 mass% or more and 0.01 mass% or less of Ga, 0 mass% or more and 0.01 mass% or less of Mn, 0 mass% or more and 0.01 mass% or less of V, 0 mass% or more and 0.1 mass% or less of P, and 0 mass% or more and 0.1 mass% or less of Ge, with a remainder being Sn and unavoidable impurities (hereinafter, also referred to as lead-free solder alloy 2).

In a certain embodiment, the content of Sb in the lead-free solder alloy 1 is preferably 0.1 mass% or more and 1.0 mass% or less, and more preferably 0.1 mass% or more and 0.9 mass% or less from the viewpoint of improvement in ductility of the solder alloy.

In a certain embodiment, the content of Cu in the lead-free solder alloy 1 is preferably 0.1 mass% or more and 1.0 mass% or less, and more preferably 0.3 mass% or more and 0.7 mass% or less from the viewpoint of ductility and prevention of copper corrosion of the solder alloy.

In a certain embodiment, Ni is contained in the lead-free solder alloy 1, so that intermetallic compound particles between Cu and Sn are micronized (prevention of growth or coarsening). This improves the strength of the alloy or the joining strength of the solder joint. Therefore, the content of Ni is preferably 0.001 mass% or more and 0.1 mass% or less, more preferably 0.005 mass% or more and 0.07 mass% or less, and further preferably 0.01 mass% or more and 0.05 mass% or less.

Ag is capable of improving wettability of a solder alloy. From the viewpoint of improvement in wettability, the content of Ag is preferably 0.001 mass% or more and 0.3 mass% or less in the lead-free solder alloy having a solidus temperature of 150°C or less.

Fe and Co have the effect of improving the joining strength of the solder joint. The respective contents of these metals are preferably 0.001 mass% or more and 0.1 mass% or less in the lead-free solder alloy having a solidus temperature of 150°C or less.

Ga, Mn, V, P, and Ge have the effect of preventing oxidation of the surface of the solder alloy. Among these, Ga, Mn, V, and Ge are preferred. The respective contents of Ga, Mn, and V are preferably 0.001 mass% or more and 0.01 mass% or less in the lead-free solder alloy having the solidus temperature of 150°C or less.

The content of Ga is preferably 0.001 mass% or more and 0.1 mass% or less in the lead-free solder alloy having a solidus temperature of 150°C or less.

Also, Si, Ca, and Ti have the effect of preventing oxidation of the surface of the solder alloy. The respective contents of these metals are preferably 0.001 mass% or more and 0.01 mass% or less in the lead-free solder alloy having the solidus temperature of 150°C or less.

It is preferred that the flux used in the solder paste of the present invention contains 4 to 12 mass% of the dicarboxylic acid(s) having 4 to 6 carbon atoms per the total mass of the flux.

The dicarboxylic acids having 4 to 6 carbon atoms include dicarboxylic acids having a straight chain (saturated) structure, and preferably include at least one selected from the group consisting of succinic acid, glutaric acid, and adipic acid, for example.

It is preferred that the imidazole compound having 3 to 6 carbon atoms or the derivative thereof is contained at 2 to 8 mass% per the total mass of the flux.

The imidazole compound having 3 to 6 carbon atoms or the derivative thereof may be one kind or a combination of two or more kinds selected from the group consisting of imidazole, 2-methylimidazole, 2-ethylimidazole, and 2-ethyl-4-methylimidazole.

It is preferred that the flux does not contain halogen, halide, and halogen-based activator from the viewpoint of reducing the environmental load.

The flux may contain a monocarboxylic acid.

When the flux contains a monocarboxylic acid, it is preferred to adjust the ratio of the content of the dicarboxylic acid having 4 to 6 carbon atoms to the content of the monocarboxylic acid (hereinafter, dicarboxylic acid/monocarboxylic acid, ratio of masses blended as raw materials) to fall within a range of 0.8 to 10 from the viewpoint of the effect of preventing generation of solder balls.

In the flux, it is more preferred to adjust the ratio of the content of the dicarboxylic acid having 4 to 6 carbon atoms to the content of the imidazole compound having 3 to 6 carbon atoms or the derivative thereof (hereinafter, dicarboxylic acid/imidazole, ratio of masses blended as raw materials) to fall within a range of 0.5 to 5 from the viewpoint of the effect of preventing generation of solder balls.

The flux may contain an antioxidant.

When the flux contains an antioxidant, it is preferred to adjust the ratio of the content of the antioxidant to the content of the imidazole compound having 3 to 6 carbon atoms or the derivative thereof (hereinafter, antioxidant/imidazole, ratio of masses blended as raw materials) to fall within a range of 1 or less from the viewpoint of the effect of preventing generation of solder balls.

In the flux, it is more preferred to perform adjustment so as to satisfy all of: the dicarboxylic acid/monocarboxylic acid within the range of 0.8 to 10; the dicarboxylic acid/imidazole within the range of 0.5 to 5; and the antioxidant/imidazole within the range of 1 or less, rather than satisfying each ratio solely, because the effect of preventing generation of solder balls is especially excellent.

A second aspect of the present invention is a solder joint formed by using the aforementioned solder paste.

A third aspect of the present invention is an electronic component or an electronic device, which has the solder joint.

### ADVANTAGEOUS EFFECTS OF THE INVENTION

A solder paste of the present invention contains a lead-free solder alloy having a solidus temperature of 150°C or less, and keeps the conventional effects of solder alloys. According to the solder paste, the properties of the solder alloy is used to effectively prevent generation of solder balls at the time of joining. Therefore, the solder paste of the present invention can enhance the reliability of joining not only in normal electronic components or electronic devices but also in electronic components or electronic devices having poor heat resistance.

### DESCRIPTION OF EMBODIMENTS

Hereinafter, embodiments of the present invention will be described.

### [Solder paste]

A solder paste of the present invention contains solder powder and a flux.

### [Solder powder]

The solder powder for use in the present invention is composed of a lead-free solder alloy having a solidus temperature of 150°C or less.

Examples of the lead-free solder alloy having such a solidus temperature include Sn-Bi-based lead-free solder alloys and Sn-In-based lead-free solder alloys. Examples of the Sn-Bi-based lead-free solder alloys include 43Sn-57Bi, 42Sn-58Bi, 42Sn-57Bi-1Ag, and Sn-Bi-based lead-free solder alloys proposed by the applicant of the present application in PTL 1. Examples of the Sn-In-based lead-free solder alloys include 50Sn-50In and 48Sn-52In.

Among these, the Sn-Bi-based lead-free solder alloys are preferred from the viewpoint of excellent cost. For example, a lead-free solder alloy 2 and a lead-free solder alloy 1 can be suitably used as the solder powder. The lead-free solder alloy 2 has an alloy composition of 56 to 60 mass% of Bi, 0 mass% or more and 0.3 mass% or less of Ag, 0 mass% or more and 0.1 mass% or less of Fe, 0 mass% or more and 0.1 mass% or less of Co, 0 mass% or more and 0.01 mass% or less of Ga, 0 mass% or more and 0.01 mass% or less of Mn, 0 mass% or more and 0.01 mass% or less of V, 0 mass% or more and 0.1 mass% or less of P, and 0 mass% or more and 0.1 mass% or less of Ge, with a remainder being Sn and unavoidable impurities. The lead-free solder alloy 1 has an alloy composition of 32 mass% or more and 40 mass% or less of Bi, 0.1 mass% or more and 1.0 mass% or less of Sb, 0.1 mass% or more and 1.0 mass% or less of Cu, and 0.001 mass% or more and 0.1 mass% or less of Ni, with a remainder being Sn and unavoidable impurities.

The alloy composition of the lead-free solder alloy 1 may be only of the aforementioned Sn, Bi, Sb, Cu, Ni, and unavoidable impurities. The alloy composition of the lead-free solder alloy 2 may be only of Sn, Bi, and unavoidable impurities.

The lead-free solder alloys 1 and 2 may further contain one or more metals selected from the group consisting of Ag, Fe, Co, Ga, Mn, V, P, and Ge as other metals.

As the lead-free solder alloy 1, following examples can be suitably used: a solder alloy containing 0.001 to 0.3 mass% of Ag with a remainder being Sn and unavoidable impurities in addition to a basic composition of 32 mass% or more and 40 mass% or less of Bi, 0.1 mass% or more and 1.0 mass% or less of Sb, 0.1 mass% or more and 1.0 mass% or less of Cu, and 0.001 mass% or more and 0.1 mass% or less of Ni;
a solder alloy containing 0.001 to 0.1 mass% of Fe with a remainder being Sn and unavoidable impurities in addition to the basic composition;
a solder alloy containing 0.001 to 0.1 mass% of Co with a remainder being Sn and unavoidable impurities in addition to the basic composition;
a solder alloy containing 0.001 to 0.01 mass% of Ga with a remainder being Sn and unavoidable impurities in addition to the basic composition;
a solder alloy containing 0.001 to 0.01 mass% of Mn with a remainder being Sn and unavoidable impurities in addition to the basic composition;
a solder alloy containing 0.001 to 0.01 mass% of V with a remainder being Sn and unavoidable impurities in addition to the basic composition;
a solder alloy containing 0.001 to 0.1 mass% of P with a remainder being Sn and unavoidable impurities in addition to the basic composition; and
a solder alloy containing 0.001 to 0.1 mass% of Ga with a remainder being Sn and unavoidable impurities in addition to the basic composition .

Particle sizes of the solder powder for use in the solder paste of the present invention are not particularly limited as long as they are adjusted to exert the effect of the present invention. It is preferred that the particle sizes are of Types 3 to 6 of the IPC standard.

### [Flux]

The flux for use in the present invention contains a rosin, a solvent, a thixotropic agent, and an organic acid and an imidazole as activators. The content of each ingredient in the flux as described later is indicated by a mass blended as a raw material in the total mass of the flux.

### [Rosin]

Examples of the rosin include natural rosins such as gum rosin, wood rosin, and tall oil rosin, modified rosins such as disproportionated rosins, hydrogenated rosins, formylated rosins, fumarated rosins, maleated rosins, and acrylated rosins, and rosin esters. One kind or a combination of two or more kinds of these rosins may be used.

The content of the rosin in the total mass of the flux is preferably 20 to 60 mass%, and more preferably 30 to 55 mass% from the viewpoint of meltability of the solder paste of the present invention, and the effect of preventing generation of solder balls, and from the viewpoint of the properties of the solder paste.

In addition to the rosin, other resins such as an acrylic resin, a rosin-based resin, a styrene-maleic acid resin, an epoxy resin, a urethane resin, a polyester resin, a phenoxy resin, a terpene resin, and polyalkylene carbonate may be used solely, or two or more of these resins may be mixed and used.

In the case of using these other resins, the total content of the rosin and the other resins only needs to be adjusted to 60 mass% or less.

### [Solvent]

As the solvent, those known and applicable to the solder paste or the flux can be used. Examples of such solvents include: alcohols such as octanediol, decanol, and 2-hexyl-1-decanol; glycols such as butyl carbitol, dibutyl carbitol, hexylene glycol, hexylene diglycol, tripropylene glycol monomethyl ether, tripropylene glycol monobutyl ether, diethylene glycol monoethyl ether, diethylene glycol monohexyl ether, diethylene glycol dibutyl ether, diethylene glycol mono-2-ethylhexyl ether, ethylene glycol monophenyl ether, triethylene glycol monobutyl ether, methylpropylene triglycol, butylpropylene triglycol, triethylene glycol butylmethyl ether, and tetraethylene glycol dimethyl ether; esters such as butyl benzoate and dibutyl maleate; hydrocarbons such as n-hexane and dodecane; and terpene derivatives such as terpineol, 1,8-terpin monoacetate, 1,8-terpin diacetate, and dihydroterpineol. These solvents may be used solely, or two or more of these solvents may be used in combination.

The content of the solvent in the total mass of the flux may be determined based on the viscosity and the printability of the solder paste, and is preferably, for example, 20 to 50 mass%.

### [Thixotropic agent]

The thixotropic agent is not particularly limited as long as it is capable of adjusting the solder paste of the present invention to have a desired viscosity, and those known and applicable to the solder paste or the flux can be used. Examples of such thixotropic agents include hardened castor oil, bees wax, carnauba wax, fatty acid amide-based wax, stearic acid amide, ethylene bisstearic acid amide, ethylene bishydroxystearic acid amide, and hexamethylene bishydroxystearic acid amide. These thixotropic agents may be used solely, or two or more of these thixotropic agents may be used in combination.

The content of the thixotropic agent in the total mass of the flux is preferably 2 to 10 mass% from various viewpoints including prevention of separation between the alloy powder and the flux, heat resistance of shape maintenance after printing, and compatibility with other raw materials.

### [Activator: organic acid]

The organic acid for use as the activator in the present invention includes one or more dicarboxylic acids having 4 to 6 carbon atoms. By using such organic acid, it is possible to effectively exert the activity even at low temperatures and prevent generation of solder balls at the time of joining, in the solder paste that is a low melting point solder and is prepared with a lead-free solder alloy having a solidus temperature of 150°C or less.

In particular, the effect of preventing generation of solder balls at the time of joining is seen in the case of using both the dicarboxylic acid having 4 to 6 carbon atoms and the imidazole compound having 3 to 6 carbon atoms or the derivative thereof.

For example, as described later in a comparative example, the present inventors have ascertained that when the organic acid consists only of a dicarboxylic acid having 10 or more carbon atoms, generation of solder balls cannot be sufficiently prevented even if an imidazole compound having 3 to 6 carbon atoms or a derivative thereof is used.

The case where the number of carbon atoms of the organic acid is 3 or less is not effective, because the heat resistance of the obtained solder paste is poor.

As the dicarboxylic acids having 4 to 6 carbon atoms, those represented by the formula HOOC-R-COOH, wherein R is an aliphatic hydrocarbon group having 2 to 4 carbon atoms, are preferred. While the bonding position of each carboxyl group is not particularly limited, both terminals are preferred for a linear form. While the aliphatic hydrocarbon group may be linear or branched, a linear saturated aliphatic hydrocarbon group is preferred. The number of carbon atoms in the branched chain may be 2 to 3.

As the dicarboxylic acids, succinic acid, glutaric acid, and adipic acid are preferred owing to their excellent effect as the activator.

These dicarboxylic acids having 4 to 6 carbon atoms may be used solely, or two or more of these dicarboxylic acids having 4 to 6 carbon atoms may be used in combination.

The content of the dicarboxylic acid having 4 to 6 carbon atoms is preferably 4 to 12 mass%, and more preferably 4 to 10 mass% per the total mass of the flux.

In the solder paste of the present invention, as the organic acid serving as the activator, a dicarboxylic acid having 10 or more carbon atoms, and a monocarboxylic acid may be added, in addition to the dicarboxylic acid having 4 to 6 carbon atoms.

Examples of the dicarboxylic acid having 10 or more carbon atoms include, but are not limited to, sebacic acid, dodecanedioic acid, and eicosanedioic acid.

Examples of the monocarboxylic acid include: but are not limited to, monovalent carboxylic acids each obtained by substituting an aliphatic hydrocarbon with a carboxyl group, such as stearic acid, palmitic acid, oleic acid, tetradecanoic acid, pentadecanoic acid, hexadecanoic acid, heptadecanoic acid, octadecanoic acid, nonadecanoic acid, eicosanoic acid, heneicosanoic acid, docosanoic acid, and 2-decyltetradecanoic acid; hydroxy fatty acids such as 12-hydroxydodecanoic acid, 12-hydroxyoctadecanoic acid, 13-hydroxytridecanoic acid, 14-hydroxytetradecanoic acid, and 9,16-dihydroxyoctadecanoic acid; and polyhydroxy fatty acids such as dihydroxyhexadecanoic acid, dihydroxyoctadecanoic acid, and dihydroxyeicosanoic acid.

The aliphatic hydrocarbon may be linear or branched, and may be saturated or unsaturated. The aliphatic hydrocarbon may have a substituent.

These dicarboxylic acids having 10 or more carbon atoms and these monocarboxylic acids each may be used solely, or two or more of these dicarboxylic acids having 10 or more carbon atoms and two or more of these monocarboxylic acids may be used in combination.

Regarding the content of the monocarboxylic acid, it is preferred to adjust the ratio of the content of the dicarboxylic acid having 4 to 6 carbon atoms to the content of the monocarboxylic acid (mass basis) to fall within 0.8 to 10.

### [Activator: imidazole]

The imidazole used as the activator in the present invention includes one or more imidazole compounds having 3 to 6 carbon atoms or derivatives thereof.

Examples of the imidazole compounds having 3 to 6 carbon atoms or the derivatives thereof include imidazole, and derivatives of imidazole compounds having one or two aliphatic hydrocarbon groups having 1 to 3 carbon atoms in the imidazole backbone. While the aliphatic hydrocarbon groups may be linear, branched, or alicyclic, aliphatic hydrocarbon groups are preferred. Examples of the imidazole compound derivatives include 2-methylimidazole, 2-ethylimidazole, and 2-ethyl-4-methylimidazole.

Among these, from the viewpoint of high reaction rate, and excellent viscosity stability due to prevention of change in the viscosity of the solder paste, imidazole, 2-ethylimidazole, and 2-ethyl-4-methylimidazole are preferred.

The imidazole compounds having 3 to 6 carbon atoms or the derivatives thereof may be used solely, or two or more of the imidazole compounds having 3 to 6 carbon atoms or the derivatives thereof may be used in combination.

It is preferred that the imidazole is contained at 2 to 8 mass% per the total mass of the flux.

In the solder paste of the present invention, combinational use of the dicarboxylic acid having 4 to 6 carbon atoms and the imidazole can stabilize the dicarboxylic acid contained in the solder paste, thereby preventing the reaction with the solder alloy, and preventing change in the viscosity of the solder paste.

The imidazole contained in the solder paste of the present invention is high in reaction rate, and can exert the effect of the activity at a relatively early stage during heating. Accordingly, such imidazole is considered to be very effective for preventing generation of solder balls from.

In the solder paste of the present invention, the effect of the present invention tends to be easily exerted by adjusting the ratio of the content of the dicarboxylic acid having 4 to 6 carbon atoms to the content of the imidazole (dicarboxylic acid/imidazole, mass basis) within a range of 0.5 to 5.

As described later in the comparative example, the present inventors have ascertained that when an imidazole compound having 10 or more carbon atoms or a derivative thereof is used alone in place of the imidazole, the effect of the activity cannot be exerted sufficiently, and generation of solder balls cannot be sufficiently prevented.

### [Antioxidant]

The solder paste of the present invention may contain an antioxidant. An example of the antioxidant is at least one of a phenol-based antioxidant and a triazole-based antioxidant.

Examples of the phenol-based antioxidant include a less hindered phenol-based antioxidant in which ortho positions on both sides of the phenol hydroxyl group are not substituted with a methyl group or a t-butyl group (tertiary butyl group), a partially hindered phenol-based antioxidant in which only one of ortho positions is substituted with a methyl group and the other of the ortho positions is substituted with a t-butyl group, and a fully hindered phenol-based antioxidant in which ortho positions on both sides are substituted with t-butyl groups. Examples of the phenol-based antioxidant include 2,2'-hydroxy 3,3-di(α-cyclohexyl)-5,5'-dimethylphenylmethane in addition to the hindered phenol-based antioxidants.

Examples of the triazole-based antioxidant include 3-amino-1,2,4-triazole, 3-(N-salicyloyl)amino-1,2,4-triazole, 3-(N-salicyloyl)amino-1,2,4-triazole, benzotriazole, 2-(2'-hydroxy-5 ' -methylphenyl)benzotriazole, 2-(2' -hydroxy-3' -tert-butyl-5' -methylphenyl)-5 - chlorobenzotriazole, 2-(2'-hydroxy-3',5'-di-tert-amylphenyl)benzotriazole, 2-(2'-hydroxy-5'-tert-octylphenyl)benzotriazole, 2,2'-methylenebis[6-(2H-benzotriazole-2-yl)-4-tert-octylphenol], 6-(2-benzotriazolyl)-4-tert-octyl-6 ' -tert-butyl-4' -methyl-2,2' -methylenebisphenol, 1,2,3-benzotriazole, 1-[N,N-bis(2-ethylhexyl)aminomethyl]benzotriazole, carboxybenzotriazole, 1-[N,N-bis(2-ethylhexyl)aminomethyl]methylbenzotriazole, 2,2'-[[(methyl-1H-benzotriazole-1-yl)methyl]imino]bisethanol, 1-(1',2'-dicarboxyethyl)benzotriazole, 1-(2,3-dicarboxypropyl)benzotriazole, 1-[(2-ethylhexylamino)methyl]benzotriazole, 2,6-bis[(1H-benzotriazole-1-yl)methyl]-4-methylphenol, and 5-methylbenzotriazole.

It is preferred that the antioxidant is contained at 0.1 to 2.5 mass% per the total mass of the flux.

In the solder paste of the present invention, it is possible to prevent generation of solder balls very effectively, regardless of the alloy composition, by adjusting the content ratio (mass basis) of dicarboxylic acid having 4 to 6 carbon atoms/monocarboxylic acid to fall within a range of 0.8 to 10, the content ratio (mass basis) of dicarboxylic acid/imidazole to fall within a range of 0.5 to 5, and the content ratio (mass basis) of antioxidant/imidazole to be 1 or less. Furthermore, when adjustment is made to satisfy all the three ratios mentioned above, it is possible to prevent generation of solder balls more effectively regardless of the alloy composition by adjusting the lower limit of the content ratio of antioxidant/imidazole to be 0.01 or more, and further to be 0.02 or more.

### [Halogen, halide, halogen-based activator]

In the solder paste of the present invention, it is preferred that the flux does not contain halogen, halide, and halogen-based activator from the viewpoint of reducing the environmental load.

In the present invention, the wording "not contain" is concretely synonymous to 0 mass% in the total mass of the flux.

Examples of the halogen and the halogen-based activator include amines, amine hydrohalides, and organic halogen compounds.

Examples of the halide include chlorides and bromides of carboxylic acids.

### [Content of flux]

The content of the flux is preferably 8.0 to 12.0 mass%, and more preferably 9.0 to 11.0 mass% per the total mass of the solder paste of the present invention, in order to make the solder paste keep a creamy form, and enable appropriate printing.

### [Production method]

The solder paste of the present invention can be produced by individually preparing powder of a lead-free solder alloy having a solidus temperature of 150°C or less, and a flux, and then kneading the obtained flux and solder powder.

As the powder of the lead-free solder alloy having a solidus temperature of 150°C or less, commercially available powdery Sn-Bi-based or Sn-In-based solder alloy or the like may be used as it is. As the lead-free solder alloys 1 and 2, solder alloys can be prepared by mixing respective metals according to a usual method.

The particle size of the solder powder may be adjusted to a desired particle size by a known technique. It is preferred that the shape of the powder is generally globular in consideration of variation in viscosity and printability of the paste.

In the step of producing the flux, predetermined amounts of a rosin, a solvent, a thixotropic agent, an organic acid, and an imidazole, which are raw materials of the flux, and an optional ingredient as needed are measured and mixed, and heat melted.

Regarding the mixing means and the heat melting means of the ingredients, means known in production of solder pastes may be used.

In the step of producing the solder paste by kneading, predetermined amounts of the solder power and the flux are measured and put into a kneading machine, and kneaded to produce a solder paste.

### [Solder joint]

A solder joint of the present embodiment can be formed according to a known method using the solder paste of the present invention.

Generation of solder balls can be effectively prevented in the formed solder joint, so that it becomes possible to achieve reliable joining in an electronic component or an electronic device having the solder joint.

The known method may be a reflow method, and besides the reflow method, any method capable of forming a solder joint such as heating by a laser can be employed without particular limitation.

Examples of a method for producing an electronic circuit-mounted board on which an electronic component is mounted include a method for preparing an electronic circuit-mounted board, which includes the steps of forming an electrode and an insulating layer at predetermined positions on the board, printing the solder paste of the present invention using a mask having a predetermined pattern, mounting an electronic component corresponding to the pattern at a predetermined position, reflowing the resultant product, and the like.

In the electronic circuit-mounted board prepared in this manner, a solder joint is formed on the electrode. In the solder joint, it becomes possible to join the electrode and the electronic component.

The electronic device may be any electronic device or the like in which the electronic component is incorporated, and is not particularly limited. Examples of the electronic device include a personal computer, consumer electronics, products, and audio devices.

For example, the electronic circuit-mounted board prepared in the above manner is used, thereby producing a highly reliable electronic controller.

Further, since the solder paste of the present invention is capable of preventing generation of solder balls in solder joining at low temperatures, the reliability of joining can be kept high even in an electronic component or electronic device having poor heat resistance.

### EXAMPLES

Hereinafter, the present invention will be described more specifically referring to Examples and Comparative Examples, but the present invention is not limited to these examples.

### <Preparation of solder powder>

Respective metals were blended according to a usual method so that compositions shown in Table 1 were achieved, to prepare solder alloys. Then, using the obtained solder alloys, solder powders (alloy compositions 1 to 19) were prepared according to an ordinary method. The particle sizes of the powders correspond to Type 4 (20 to 38 µm) of the IPC standard.

Each of the obtained solder powders was a lead-free solder alloy having a solidus temperature of 150°C or less. Each solder alloy had the composition shown in Table 1, and contained unavoidable impurities resulting from the raw materials.

**[Table 1]**

| | Alloy composition (mass%) | | | | | | | | | | | | |
|---|---|---|---|---|---|---|---|---|---|---|---|---|---|
| | Sn | Bi | Sb | Cu | Ni | Ag | Fe | Co | Cra | Mn | V | P | Ge |
| Alloy composition 1 | Remainder | 32.000 | 0.100 | 0.100 | 0.001 | - | - | - | - | - | - | - | - |
| Alloy composition 2 | Remainder | 40.000 | 1.000 | 1.000 | 0.100 | - | - | - | - | - | - | - | - |
| Alloy composition 3 | Remainder | 33.000 | 0.300 | 0.300 | 0.003 | 0.001 | - | - | - | - | - | - | - |
| Alloy composition 4 | Remainder | 34.000 | 0.700 | 0.500 | 0.007 | 0.300 | - | - | - | - | - | - | - |
| Alloy composition 5 | Remainder | 35.000 | 0.500 | 0.500 | 0.005 | - | 0.001 | - | - | - | - | - | - |
| Alloy composition 6 | Remainder | 37.000 | 0.900 | 0.900 | 0.070 | - | 0.100 | - | - | - | - | - | - |
| Alloy composition 7 | Remainder | 36.000 | 0.300 | 0.300 | 0.010 | - | - | 0.001 | - | - | - | - | - |
| Alloy composition 8 | Remainder | 39.000 | 0.500 | 0.500 | 0.030 | - | - | 0.100 | - | - | - | - | - |
| Alloy composition 9 | Remainder | 33.000 | 0.500 | 0.300 | 0.003 | - | - | - | 0.001 | - | - | - | - |
| Alloy composition 10 | Remainder | 34.000 | 0.900 | 0.700 | 0.030 | - | - | - | 0.010 | - | - | - | - |
| Alloy composition 11 | Remainder | 36.000 | 0.300 | 0.300 | 0.010 | - | - | - | - | 0.001 | - | - | - |
| Alloy composition 12 | Remainder | 37.000 | 0.700 | 0.700 | 0.030 | - | - | - | - | 0.010 | - | - | - |
| Alloy composition 13 | Remainder | 35.000 | 0.300 | 0.300 | 0.100 | - | - | - | - | - | 0.001 | - | - |
| Alloy composition 14 | Remainder | 38.000 | 0.900 | 0.700 | 0.050 | - | - | - | - | - | 0.010 | - | - |
| Alloy composition 15 | Remainder | 34.000 | 0.500 | 0.500 | 0.007 | - | - | - | - | - | - | 0.001 | - |
| Alloy composition 16 | Remainder | 35.000 | 0.700 | 0.900 | 0.070 | - | - | - | - | - | - | 0.010 | - |
| Alloy composition 17 | Remainder | 39.000 | 0.300 | 0.500 | 0.005 | - | - | - | - | - | - | - | 0.001 |
| Alloy composition 18 | Remainder | 38.000 | 0.900 | 0.900 | 0.050 | - | - | - | - | - | - | - | 0.010 |
| Alloy composition 19 | Remainder | 58.000 | - | - | - | - | - | - | - | - | - | - | - |

### <Preparation of flux>

### Production Example 1

Respective raw materials were mixed at ratios shown in Table 2, and heat melted at a temperature ranging from 90 to 160°C to prepare a flux.

The ratio of the content of the dicarboxylic acid having 4 to 6 carbon atoms to the content of the imidazole compound having 3 to 6 carbon atoms or the derivative thereof (dicarboxylic acid/imidazole in Tables 2, 3) was adjusted to 2.0, the ratio of the content of the dicarboxylic acid having 4 to 6 carbon atoms to the content of the monocarboxylic acid (dicarboxylic acid/monocarboxylic acid, in Tables 2, 3) was adjusted to 4.0, and the ratio of the content of the antioxidant to the content of the imidazole compound having 3 to 6 carbon atoms or derivative thereof (antioxidant/imidazole in Tables 2, 3) was adjusted to 0.05.

### Production Examples 2 to 24

Various fluxes were prepared in the same manner as in Production Example 1 except that the raw material composition was changed to those shown in Tables 2, 3.

### Comparative Production Examples 1 to 8

Various fluxes were prepared in the same manner as in Production Example 1 except that the raw material composition was changed to those shown in Table 4.

The ratio of dicarboxylic acid/imidazole, the ratio of dicarboxylic acid/monocarboxylic acid, and the ratio of antioxidant/imidazole in Table 4 were calculated based on the amounts of the dicarboxylic acid having 4 to 6 carbon atoms and the imidazole having 3 to 6 carbon atoms, which were blended as raw materials and are described in Table 4.

**[Table 2]**

| (Examples, Production Examples (1 to 12)* (mass%) | | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|---|
| | | | | | Production Example 1 | Production Example 2 | Production Example 3 | Production Example 4 | Production Example 5 | Production Example 6 | Production Example 7 | Production Example 8 | Production Example 9 | Production Example 10 | Production Example 11 | Production Example 12 |
| | Rosin | | | Modified rosin | 24.0 | 23.0 | 21.0 | 20.0 | 21.0 | 21.0 | 21.0 | 21.0 | 20.0 | 20.0 | 15.0 | 17.0 |
| | | | | Rosin ester | 7.0 | 7.0 | 6.0 | 7.0 | 7.0 | 10.0 | 4.0 | 6.0 | 7.0 | 7.0 | 7.0 | 8.0 |
| | | | | Hydrogenated rosin | 24.0 | 21.0 | 21.0 | 20.0 | 19.0 | 18.0 | 21.0 | 19.0 | 20.0 | 17.0 | 18.0 | 16.0 |
| | Solvent | | | Tripropylene glycol monobutyl ether | 20.0 | 14.0 | | 14.0 | 35.9 | 12.5 | | 20.0 | 20.0 | 20.0 | 19.9 | 20.0 |
| | | | | Diethylene glycol monohexyl ether | 11.9 | 19.5 | | 20.5 | | 19.0 | 18.9 | 11.5 | 7.9 | 13.0 | | |
| | | | | Tetraethylene glycol dimethyl ether | | | 32.9 | | | | 12.0 | | 4.0 | | 13.0 | 13.0 |
| | Thixotropic agent | | | Ethylene bishydroxystearic acid amide | 6.0 | | | | 6.0 | | | | 6.0 | | | |
| | | | | Hexamethylene bishydroxystearic acid amide | | 6.0 | 6.0 | | | 6.0 | 6.0 | | | 6.0 | 60 | |
| | | | | Hardened castor oil | | | | 3.0 | | | | 3.0 | | | | 3.0 |
| | Activator | Organic acid | Dicarboxylic acid | Succinic acid | 2.0 | 3.0 | | 4.0 | 2.0 | 2.0 | | 4.0 | 4.0 | 4.0 | | 6.0 |
| | | | | Glutaric acid | 2.0 | | 2.0 | | 2.0 | | 2.0 | | 8.0 | | 6.0 | |
| | | | | Adipic acid | | 2.0 | 2.0 | | | 2.0 | 2.0 | | | 8.0 | 6.0 | 6.0 |
| Flux | | | | Cebacic acid | | | | | | | | | | | | |
| | | | | Dodecanedioic acid | | | | | | | | | | | | |
| | | | Monocarboxylic acid | Stearic acid | 1.0 | | | 1.0 | 5.0 | | | 5.0 | 1.0 | | | 1.0 |
| | | | | Palmitic acid | | 1.0 | | | | 5.0 | | | | 1.0 | | |
| | | | | Oleic acid | | | 1.0 | | | | 5.0 | | | | 1.0 | |
| | | Imidazole | | Imidazole | 2.0 | | | | 2.0 | | | 8.0 | 1.0 | 1.0 | | 4.0 |
| | | | | 2-ethylimidazole | | 2.0 | | 8.0 | | 2.0 | | | 1.0 | 1.0 | 4.0 | 2.0 |
| | | | | 2-ethyl-4-methylimidazole | | | 8.0 | | | | 8.0 | | | | 4.0 | 2.0 |
| | | | | 2-phenyl-4-methylimidazole | | | | | | | | | | | | |
| | | | | 2-undecylimidazole | | | | | | | | | | | | |
| | Antioxidant | | | 2,2'-hydroxy 3,3-di(α-cyclohexyl)-5,5'-dimethylphenytethane | | 2.5 | | 2.5 | | 2.5 | | 2.5 | | 2.0 | | 2.0 |
| | | | | 3-(N-salycyloyl)amino-1,2,4-triazole | 0.1 | | 0.1 | | 0.1 | | 0.1 | | 0.1 | | 0.1 | |
| | Flux total | | | | 100.0 | 100.0 | 100.0 | 100.0 | 100.0 | 100.0 | 100.0 | 100.0 | 100.0 | 100.0 | 100.0 | 100.0 |
| Ratio | Dicarboxylic acid/Imidazole | | | | 2.0 | 2.0 | 0.5 | 0.5 | 2.0 | 2.0 | 0.5 | 0.5 | 6.0 | 6.0 | 1.5 | 1.5 |
| | Dicarboxylic acid/Monocarboxylic acid | | | | 4.0 | 4.0 | 4.0 | 4.0 | 0.8 | 0.8 | 0.8 | 0.8 | 12.0 | 12.0 | 12.0 | 12.0 |
| | Aitioxidant/Imidazole | | | | 0.05 | 1.3 | 0.0125 | 0.31 | 0.05 | 1.3 | 0.0125 | 0.31 | 0.05 | 1.0 | 0.0125 | 0.25 |
| Test results | Solder baltest results (Alloy having alloy composition I in Table 1) | | | | ⊚ | ○ | ○ | ⊚ | ⊚ | ○ | ○ | ⊚ | ○ | ○ | ○ | ○ |

**[Table 3]**

| /Examples, Production Examples (13 to 24)* (mass%) | | | | | Example 13 | Example 14 | Example 15 | Example 16 | Example 17 | Example 18 | Example 19 | Faanple 20 | Example 21 | Example 22 | Example 23 | Example 24 |
|---|---|---|---|---|---|---|---|---|---|---|---|---|---|---|---|---|
| | | | | | Production Example 13 | Production Example 14 | Production Example 15 | Production Example 16 | Production Example 17 | Production Example 18 | Production Example 19 | Production Fxaniple 20 | Production Example 21 | Production Example 22 | Production Example 23 | Production Example 24 |
| | Rosin | | | Modified rosin | 15.0 | 19.0 | 18.0 | 17.0 | 21.0 | 23.0 | 21.0 | 20.0 | 20.0 | 19.0 | 18.0 | 20.0 |
| | | | | Rosin ester | 8.0 | 4.0 | 4.0 | 3.0 | 7.0 | 4.0 | 6.0 | 5.0 | 5.0 | 6.0 | 6.0 | 4.0 |
| | | | | Hydrogenated rosin | 20.0 | 18.0 | 15.0 | 17.0 | 21.0 | 17.0 | 20.0 | 19.0 | 20.0 | 19.0 | 18.0 | 20.0 |
| | Solvent | | | Tripropytene glycol monobutyl ether | 17.0 | 16.5 | 19.9 | 20.5 | 14.0 | 10.0 | 10.9 | 20.5 | 20.0 | 120 | 18.0 | 10.0 |
| | | | | Diethylene glycol mmoUeiryl ether | 14.9 | | 12.0 | 12.0 | 10.9 | 10.5 | 22.0 | 13.0 | 22.0 | 12.0 | | 10.0 |
| | | | | Tetraethylene glycol dimethyl ether | | 15.0 | | | 10.0 | 12.0 | | | | 12.0 | 18.0 | 10.0 |
| | Thixotropic agent | | | Ethylene bishydroxystearic acid amide | 6.0 | | | | 6.0 | | | | 3.0 | 4.0 | 4.0 | |
| | | | | Hexamethylene bishydroxystearic acid amide | | 6.0 | 6.0 | | | 6.0 | 6.0 | | 3.0 | 2.0 | 2.0 | |
| | | | | Hardened castor oil | | | | 3.0 | | | | 3.0 | | | | 4.0 |
| | Activator | Organic acid | Dicarboxylic acid | Succinic acid | 4.0 | 4.0 | | 6.0 | 3.0 | 4.0 | 4.0 | 5.0 | 2.0 | 2.0 | 12.0 | 10.0 |
| | | | | Glutaric acid | 8.0 | | 6.0 | | 3.0 | | 3.0 | | | 2.0 | | 2.0 |
| | | | | Adipic acid | | 8.0 | 6.0 | 6.0 | | 4.0 | 3.0 | 5.0 | 2.0 | | | |
| Flux | | | | Cebacic acid | | | | | | | | | | | | |
| | | | | Dodecanedioic acid | | | | | | | | | | | | |
| | | | Monocarboxylic acid | Stearic acid | 5.0 | | | 5.0 | 1.0 | | | 1.0 | | | | |
| | | | | Palmitic acid | | 5.0 | | | | 1.0 | | | | | | |
| | | | | Oleic acid | | | 5.0 | | | | 1.0 | | | | | |
| | | Inidazole | | Imidazole | 2.0 | | | 8.0 | 3.0 | | | | 2.0 | | 3.0 | |
| | | | | 2-ethylimidazole | | 2.0 | | | | 6.0 | | 6.0 | | 80 | | |
| | | | | 2-ethyl-4-methylimidazole | | | 8.0 | | | | 3.0 | | | | | 8.0 |
| | | | | 2-phenyl-4-methylimidazole | | | | | | | | | | | | |
| | | | | 2-undecylimidazole | | | | | | | | | | | | |
| | Antioxidant | | | 2,2'-hydroxy3,3-di(α-cyclohexyl)-5,5'-dimethylphenylmethane | | 2.5 | | 2.5 | | 2.5 | | 2.5 | | 2.0 | | 2.0 |
| | | | | 3-(N-salycyloyl)amino-1,2,4-triazole | 0.1 | | 0.1 | | 0.1 | | 0.1 | | 1.0 | | 1.0 | |
| | Flux total | | | | 100.0 | 100.0 | 100.0 | 100.0 | 100.0 | 100.0 | 100.0 | 100.0 | 100.0 | 100.0 | 100.0 | 100.0 |
| Rate | Dicarboxylic acid/Imidazole | | | | 6.0 | 6.0 | 1.5 | 1.5 | 2.0 | 1.3 | 3.3 | 1.7 | 2.0 | 0.5 | 4.0 | 1.5 |
| | Dicarboxylic acid/Monocarboxylic acid | | | | 2.4 | 2.4 | 2.4 | 2.4 | 6.0 | 8.0 | 10.0 | 10.0 | Uncalculable | Uncalculable | Uncalculable | Uncalculable |
| | Antioxidant/Imidazole | | | | 0.05 | 1.3 | 0.0125 | 0.31 | 0.03 | 0.4 | 0.03 | 0.4 | 0.50 | 0.3 | 0.33 | 0.3 |
| Test results | Solder ball test results (Alloy having alloy composition 1 in Table 1) | | | | ○ | ○ | ⊚ | ⊚ | ⊚ | ⊚ | ⊚ | ⊚ | ⊚ | ⊚ | ⊚ | ⊚ |

**[Table 4]**

| /Comparative Examples, Comparative Production Examples (I to 8)* (mass%) | | | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|
| | | | | | Comparative Production Example 1 | Comparative Production Example 2 | Comparative Production Example 3 | Comparative Production Example 4 | Comparative Production Example 5 | Comparative Production Example 6 | Comparative Production Example 7 | Comparative Production Example 8 |
| | Rosin | | | Modified rosin | 22.0 | 19.0 | 22.0 | 22.0 | 18.0 | 20.0 | 25.0 | 200 |
| | | | | Rosin ester | 5.0 | 9.0 | 9.0 | 8.0 | 5.0 | 6.0 | 4.0 | 3.0 |
| | | | | Hydrogenated rosin | 220 | 18.0 | 19.0 | 21.0 | 18.0 | 13.0 | 20.0 | 16.0 |
| | Solvent | | | Tripropylene glycol monobutyl ether | 25.0 | 13.0 | 15.0 | 14.0 | 25.0 | 25.0 | 25.5 | 25.0 |
| | | | | Diethylene glycol monohexyl ether | 9.0 | 9.5 | 10.0 | 7.0 | 14.0 | | | 8.0 |
| | | | | Tetraethylene glycol dimethyl ether | | 10.0 | 7.0 | 10.0 | | 5.0 | 16.0 | |
| | Thixotropic agent | | | Ethylene bishydroxystearic acid amide | 6.0 | | | | 3.0 | 4.0 | | |
| | | | | Hexamethylene bishydroxystearic acid amide | | 6.0 | 6.0 | | | | 2.0 | |
| | | | | Hardened castor oil | | | | 3.0 | | | | 3.0 |
| | Activator | Organic acid | Dicarboxylic acid | Succinic acid | | | | | | | | |
| | | | | Glutaric acid | | | 2.0 | | | | | 2.5 |
| | | | | Adipic acid | | | 2.0 | 4.0 | | | 4.0 | 2.5 |
| Flux | | | | Cebacic acid | 5.0 | | | | 2.0 | 10.0 | | |
| | | | | Dodecanedioic acid | | 8.0 | | | 2.0 | 5.0 | | 12.0 |
| | | | Monocarboxylic acid | Stearic acid | 1.0 | | | 5.0 | | 1.0 | 0.5 | |
| | | | | Palmitic acid | | 3.0 | | | 3.0 | | | |
| | | | | Oleic acid | | | 2.0 | | | | | 4.0 |
| | | Imidazole | | Imidazole | 4.0 | | | | 5.0 | | | |
| | | | | 2-ethylimidazole | | 2.0 | | | 4.0 | 5.0 | | |
| | | | | 2-ethyl-4-methylimidazole | | | | | | 1.0 | | |
| | | | | 2-phenyl-4-methylimidazole | | | 4.0 | | | | 1.0 | |
| | | | | 2-undecylimidazole | | | | 5.0 | | 3.0 | | 3.0 |
| | Antioxidant | | | 2,2'-hydroxy 3,3-di(α-cyclohexyl)-5,5'-dimethylphenylmethane | 1.0 | 2.5 | 2.0 | 1.0 | 1.0 | 2.0 | 2.0 | 1.0 |
| | | | | 3-(N-salycyloyl)amino-1,2,4-triazole | | | | | | | | |
| | Flux total | | | | 100.0 | 100.0 | 100.0 | 100.0 | 100.0 | 100.0 | 100.0 | 100.0 |
| Ratio | Dicarboxylic acid/Imidazole | | | | * | * | * | * | * | * | * | * |
| | Dicarboxylic acid/Monocarboxylic acid | | | | * | * | 2.0 | 0.8 | * | * | 8.0 | 4.3 |
| | Antioxidant/Imidazole | | | | 0.3 | 1.3 | * | * | 0.1 | 0.2 | • | * |
| Test results | Solder ball test results (Alloy having alby composition 1 in Table 1) | | | | × | × | Δ | Δ | × | × | Δ | Δ |

| | | | | | | | | | | | | |
|---|---|---|---|---|---|---|---|---|---|---|---|---|
| * Since dicarboxylic acids other than the dicarboxylic acids having 4 to 6 carbon atoms and imidazoles other than the imidazoles having 3 to 6 carbon atoms are not objects to be calculated, ratios are not calculated. | | | | | | | | | | | | |

### <Preparation of solder paste>

As shown in Table 5, solder powder of a lead-free solder alloy and a flux were combined and a solder paste was prepared according to a usual method.

The mass ratio between the flux and the solder powder was set as flux : solder powder = 10:90.

For the obtained solder paste, prevention of solder balls was evaluated in the following procedure. The results are shown in Table 5.

### <Evaluation of solder ball prevention>

The evaluation was performed by the solder ball test method defined in JIS Z 3284. Specifically, a solder paste was printed (6.5 mmϕ) on a ceramic plate, and the solder paste was heat melted at 209°C (alloy compositions 1 to 18) or at 174°C (alloy composition 19) on a hot plate.

After melting, the melted solder was formed in a single large globular shape on the ceramic plate. Solder particles (solder balls) that were present around the large globular solder and were not able to aggregate into one were observed, and the solder balls were counted by the method described in JIS, and evaluated according to the following evaluation criteria. The smaller the number of solder balls, the better the evaluation is.

### <Criteria for evaluation of solder ball suppression>

The evaluation was performed based on the number of remaining solder balls
⊚: 2 or less
∘: 3 to 5
Δ: 6 to 20
×: 21 or more

**[Table 5]**

| | Solder ball test results | | | | | | |
|---|---|---|---|---|---|---|---|
| | Production Examples of fluxes (Tables 2 to 4) | | | | | | |
| | Production Example 1 | Production Example 10 | Production Example 15 | Production Example 20 | Comparative Production Example 1 | Comparative Production Example 5 | Comparative Production Example 8 |
| Alloy composition 1 | ⊚ | ○ | ⊚ | ⊚ | × | × | Δ |
| Alloy composition 2 | ⊚ | ○ | ⊚ | ⊚ | × | × | × |
| Alloy composition 3 | ⊚ | ○ | ⊚ | ⊚ | × | × | Δ |
| Alloy composition 4 | ⊚ | ○ | ⊚ | ⊚ | × | × | Δ |
| Alloy composition 5 | ⊚ | ○ | ⊚ | ⊚ | × | × | × |
| Alloy composition 6 | ⊚ | ○ | ⊚ | ⊚ | × | × | × |
| Alloy composition 7 | ⊚ | ○ | ⊚ | ⊚ | × | × | Δ |
| Alloy composition 8 | ⊚ | ○ | ⊚ | ⊚ | × | × | × |
| Alloy composition 9 | ⊚ | ○ | ⊚ | ⊚ | × | × | Δ |
| Alloy composition 10 | ⊚ | ○ | ⊚ | ⊚ | × | × | × |
| Alloy composition 11 | ⊚ | ○ | ⊚ | ⊚ | × | × | Δ |
| Alloy composition 12 | ⊚ | ○ | ⊚ | ⊚ | × | × | × |
| Alloy composition 13 | ⊚ | ○ | ⊚ | ⊚ | × | × | Δ |
| Alloy composition 14 | ⊚ | ○ | ⊚ | ⊚ | × | × | × |
| Alloy composition 15 | ⊚ | ○ | ⊚ | ⊚ | × | × | Δ |
| Alloy composition 16 | ⊚ | ○ | ⊚ | ⊚ | × | × | × |
| Alloy composition 17 | ⊚ | ○ | ⊚ | ⊚ | × | × | Δ |
| Alloy composition 18 | ⊚ | ○ | ⊚ | ⊚ | × | × | × |
| Alloy composition 19 | ⊚ | ○ | ⊚ | ⊚ | × | × | × |

From the results shown in Table 5, the solder pastes prepared by using the fluxes of Production Examples 1, 15, and 20 were evaluated as ⊚ for prevention of solder ball generation, for every combination of alloy compositions 1 to 19 of compositions of solder powder, and all these solder pastes significantly exerted the effect of preventing generation of solder balls regardless of the alloy composition.

Also, the solder pastes prepared by using the flux of Production Example 10 was evaluated as o for prevention of solder ball generation, for every combination of alloy compositions 1 to 19 of compositions of solder powder, and all these solder pastes sufficiently exerted the effect of preventing generation of solder balls regardless of the alloy composition.

In particular, all the fluxes of Production Examples 1, 15, and 20 were those having dicarboxylic acid/imidazole adjusted within a range of 0.5 to 5, dicarboxylic acid/monocarboxylic acid adjusted within a range of 0.8 to 10, and antioxidant/imidazole adjusted within a range of 1 or less.

In contrast to this, the solder pastes prepared in combination with the fluxes of Comparative Production Examples 1, 5, and 8 were evaluated as △ or × for prevention of solder ball generation, and were inferior in the effect of preventing generation of solder balls to the fluxes used in the above Production Examples.

### Examples 1 to 24, Comparative Examples 1 to 8

Next, solder pastes were prepared by mixing fluxes obtained in Production Examples 1 to 24 and Comparative Production Examples 1 to 8, and solder powder having a composition of alloy composition 1.

The mass ratio between the flux and the solder powder was set as flux : solder powder = 10:90.

Next, the obtained solder pastes were used to perform evaluation for prevention of solder ball generation in the same manner as described above. The results are shown in Tables 2, 3, and 4.

According to Tables 2, 3, and 4, while the evaluation results were △ and × for Comparative Examples 1 to 8, the evaluation results were ⊚ or ○ for Examples 1 to 24, and the effect of preventing solder balls was observed in all of Examples 1 to 24.

Regarding the content ratio of the flux obtained in Production Example 1 and the solder powder having a composition of alloy composition 1, the effect of preventing solder balls was evaluated for a case where the ratio of the content of the flux in the solder paste was changed to 9.0 mass% and 11.0 mass%, and the evaluation result was ⊚ in both cases.

From the results of Tables 2, 3, and 4, when focusing on the compositions of the fluxes evaluated as ⊚ for the effect of preventing solder balls in the case of containing a monocarboxylic acid, it can be recognized that the ratio (mass basis) of the content of the dicarboxylic acid having 4 to 6 carbon atoms to the content of the monocarboxylic acid falls within the range of 0.8 to 10, the ratio (mass basis) of the content of the dicarboxylic acid having 4 to 6 carbon atoms to the content of the imidazole falls within the range of 0.5 to 5, and the ratio (mass basis) of the content of the antioxidant to the content of the imidazole falls within the range of 1 or less, and all the three ratios are satisfied (Examples 1, 4, 5, 8, and 15 to 20).

It is also recognized that when the three ratios are adjusted to fall within the aforementioned numerical ranges, the effect of preventing solder balls becomes easier to be exerted by adjusting the lower limit of the antioxidant/imidazole to be 0.01 or more, and the effect of preventing solder balls becomes easier to be exerted more significantly by adjusting the lower limit to be 0.02 or more.

### INDUSTRIAL APPLICABILITY

Since the solder paste of the present invention contains a lead-free solder alloy having a low melting point and a solidus temperature of 150°C or less, and can effectively prevent generation of solder balls at the time of joining. Therefore, it is expected that application of the solder paste to being mounted on a board of an electronic device that requires joining with an electronic component having poor heat resistance, such as a personal computer.

## Claims

1. A solder paste containing solder powder and a flux, wherein
the solder powder is a lead-free solder alloy having a solidus temperature of 150°C or less,
the flux contains: a rosin; a solvent; a thixotropic agent; and an organic acid and an imidazole as an activator,
the organic acid includes one or more kinds of dicarboxylic acids having 4 to 6 carbon atoms, and
the imidazole includes one or more kinds among imidazole compounds having 3 to 6 carbon atoms and derivatives thereof.

2. The solder paste according to claim 1, wherein the lead-free solder alloy having the solidus temperature of 150°C or less is one of:
(i) a lead-free solder alloy containing 32 mass% or more and 40 mass% or less of Bi, 0.1 mass% or more and 1.0 mass% or less of Sb, 0.1 mass% or more and 1.0 mass% or less of Cu, 0.001 mass% or more and 0.1 mass% or less of Ni, 0 mass% or more and 0.3 mass% or less of Ag, 0 mass% or more and 0.1 mass% or less of Fe, 0 mass% or more and 0.1 mass% or less of Co, 0 mass% or more and 0.01 mass% or less of Ga, 0 mass% or more and 0.01 mass% or less of Mn, 0 mass% or more and 0.01 mass% or less of V, 0 mass% or more and 0.1 mass% or less of P, and 0 mass% or more and 0.1 mass% or less of Ge, with a remainder being Sn and unavoidable impurities; and
(ii) a lead-free solder alloy containing 56 to 60 mass% of Bi, 0 mass% or more and 0.3 mass% or less of Ag, 0 mass% or more and 0.1 mass% or less of Fe, 0 mass% or more and 0.1 mass% or less of Co, 0 mass% or more and 0.01 mass% or less of Ga, 0 mass% or more and 0.01 mass% or less of Mn, 0 mass% or more and 0.01 mass% or less of V, 0 mass% or more and 0.1 mass% or less of P, and 0 mass% or more and 0.1 mass% or less of Ge, with a remainder being Sn and unavoidable impurities.

3. The solder paste according to claim 1 or 2, wherein a content of at least one kind of the dicarboxylic acids having 4 to 6 carbon atoms is 4 to 12 mass% per a total mass of the flux.

4. A solder joint formed by using the solder paste according to any one of claims 1 to 3.

5. An electronic component having the solder joint according to claim 4 or an electronic device having the solder joint according to claim 4.
